# EUROPÄISCHE PATENTANMELDUNG

(11) **EP 3 701 821 A1**
(43) Veröffentlichungstag der Anmeldung: **02.09.2020**
(21) Anmeldenummer: 20000086.7
(22) Anmeldetag: 27.02.2020
(51) Int. Cl.: A41D 1/00, A41D 13/01, B60Q 1/26, B60Q 7/00, G08B 5/00, A41D 3/00, A42B 3/04, B60Q 1/44

(54) **SIGNAL- UND WARNWESTE MIT ANZEIGE-ELEMENTEN ZUM ZWECKE DER OPTISCHEN SIGNALISIERUNG VON FAHRSITUATIONEN NACH STVO**

(30) Priorität: 01.03.2019 DE 202019001030 U
(71) Anmelder: Kett, Reinhold, 85258 Weichs (DE)
(72) Erfinder: Kett, Reinhold, 85258 Weichs (DE)

(57) **Zusammenfassung**

Das Kleidungsstück wurde mit dem Ziel entwickelt, neben der besseren Erkennbarkeit von Zweiradfahrern bei Dunkelheit und schlechten Sichtverhältnissen eine zusätzliche, aktive Signalisierung der Fahrsituationen zu ermöglichen.

Als Anzeigefunktion stehen Blinken LINKS, Blinken RECHTS, Warnblinken, Rücklichtfunktion und Bremslichtfunktion zur Verfügung.

Die gegen Feuchtigkeit und Nässe versiegelten, flexiblen Signalelemente (LEDs) sind in der Kleidung permanent und wetterfest integriert und werden mittels eines am Lenker befestigten Bedienterminals per Funk angesteuert, wobei die Bremslichtfunktion automatisch mittels eines G-Sensors generiert wird.

Das Bedienterminal ist so gestaltet, dass es ohne Werkzeug an jedem Lenker angebracht bzw. abgenommen werden kann (Diebstahlsicherung).

Im Empfangsteil der Weste ist die Steuerung mit dem integrierten Akku steckbar untergebracht und kann für externe Aufladung abgenommen werden.

Der Vorteil des Konzeptes besteht darin, dass mit der "Signal-Kleidung" eine fahrzeugunabhängige Anwendung möglich ist und infolge des portablen Bedienterminals auch für Skateboarder, Jogger, Wanderer, Reiter, etc. benutzbar ist. Desgleichen kann die Signalfunktion WARNBLINKEN in professionelle Schutzkleidung oder auch in eine Auto-Warnweste integriert werden.

Weiterhin können zusätzliche Funktionen implementiert werden, z.B. NOTRUF, GPS, DashCam, Internet-Vernetzung, etc.

## Beschreibung

Die Erfindung betrifft eine Signal- und Warnvorrichtung, hauptsächlich für Zweiradfahrer, welche diverse, integrierte und entsprechend positionierte Anzeigeelemente, bevorzugt LEDs aufweist und welche als optische Signalisierung im Wesentlichen zur Fahrtrichtungs- oder abrupten Bremsindikation für Verkehrsteilnehmer dient, sowie weiterer Anzeigefunktionen für Rücklicht und Nebelschlussleuchte.

Die Vorrichtung ist zweckmäßig in eine Weste oder Jacke integriert, kann aber auch in Helmen, Rucksäcken oder Schultaschen eingebaut werden.

Die Datenübermittlung zur Steuerung der Signalelemente erfolgt drahtlos per Funk, vorzugsweise mittels Bluetooth, wobei sich der Sender in einem Bedienteil beispielsweise an einer Lenkstange eines Fahrzeuges und das Empfangsteil beispielsweise in einer Weste, Jacke, Rücksack oder Helm befinden.

Am Bedienteil können folgende Signale manuell eingeschaltet und an der Weste empfangen und angezeigt werden: Fahrtrichtungen LINKS und RECHTS, Warnblinken, Rücklicht, Nebelschlussleuchte und Bremslicht, wobei die Bremslichtsteuerung mittels eines im Bedienteil untergebrachten Sensors (G-Sensors) automatisiert ist.

Die Stromversorgung der Anzeigeelemente in der Weste wird durch Akkus sichergestellt, wobei die Akkuladung einerseits automatisch mittels Solarzellen und/oder andererseits bei Bedarf in Form eines USB-Anschlusses oder einer kontaktlosen Induktions-Ladeeinrichtung sichergestellt wird.

Die Elektronik der Signal- und Warnvorrichtung ist als hermetisch abgeschlossenes, eigenständiges und absolut wartungsfreies System gestaltet und kann bei Integration beispielsweise in eine Weste oder ein Jacke wie ein normales Kleidungsstück komfortabel getragen werden, welches infolge der dauerhaften Versiegelung auch durch Waschmaschineneinsatz nicht beeinträchtigt wird.

Das wasserdichte Bedienteil ist ohne Werkzeug beispielsweise an einer Lenkstange montierbar und kann bei Nichtgebrauch des Systems in einer eigens dafür vorgesehenen Tasche in der Weste untergebracht werden (Diebstahlsicherung). Das Tragen einer derartigen Signal- und Warnvorrichtung stellt einen Beitrag zur Erhöhung der Verkehrssicherheit dar, insbesondere bei schlechten Sichtverhältnissen und vermeidet Unfälle.

Daneben ist es mit der Vorrichtung möglich, Fahrschülern und Fahranfängern schon frühzeitig mit einem bestimmungsgemäßen Gebrauch von Fahrtrichtungsanzeigern und Beleuchtungsfunktionen nach den gesetzlichen Bestimmungen der StVO eines Fahrzeuges vertraut zu machen, so wie es auch bei motorisierten Zweirädern oder beim Kfz der Fall ist.

Herkömmliche Warnwesten bieten entweder meist nur Reflexionsstreifen oder bestenfalls auch partielle, optische Indikatoren, jedoch keinerlei optischen Signale zur Anzeige der jeweiligen Fahrsituation entsprechend den gesetzlichen Bestimmungen.

Daneben kann die Weste auch von Skateboardfahrern benutzt werden. Mit Hilfe einer zusätzlich anzubringenden LED-Matrix kann die Weste mit zusätzlichen Anzeigefunktionen ausgestattet werden und so von einem Einsatzpersonal benutzt werden.

Es ist auch möglich, das Kleidungsstück als Motorradweste einzusetzen und eine Aktivierung der Anzeigefunktionen parallel mit den Schaltfunktionen am Kraftrad zu verbinden, ohne das vorgesehene Bedienterminal zu benutzen.

Wird nur die Grundfunktion "WARNBLINKEN" aktiviert, so kann die Weste auch als Auto-Warnweste bei Pannen oder Unfällen benutzt werden.

Mit den heutigen Technologien können zusätzliche Funktionen im Empfangsteil integriert werden, so, z.B. Notruf, GPS-Lokator, Speicherung von Bewegungsdaten, Internet-Vernetzung, Anzeige von Push-Nachrichten des Smartphones, etc.

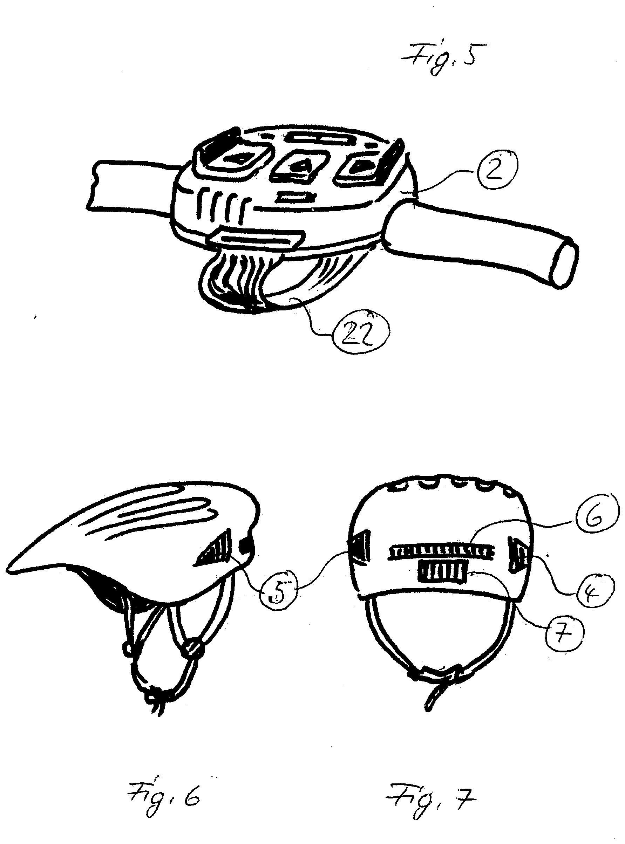

Im Folgenden wird die Erfindung näher beschrieben:
Die Signal- und Warnweste kommt in erster Linie für Zweiradfahrer zur Anwendung, welche im Straßenverkehr entsprechend der gesetzlichen Bestimmungen zur Anzeige von Richtungssignalen für den nachfolgenden Verkehr verpflichtet sind. Gleichzeitig ermöglicht die Erfindung auch eine zusätzliche Beleuchtung von einer bereits vorhandenen Fahrzeugbeleuchtung zur erweiterten Indikation für nachfolgende Verkehrsteilnehmer, insbesondere bei schlechten Witterungsverhältnissen.

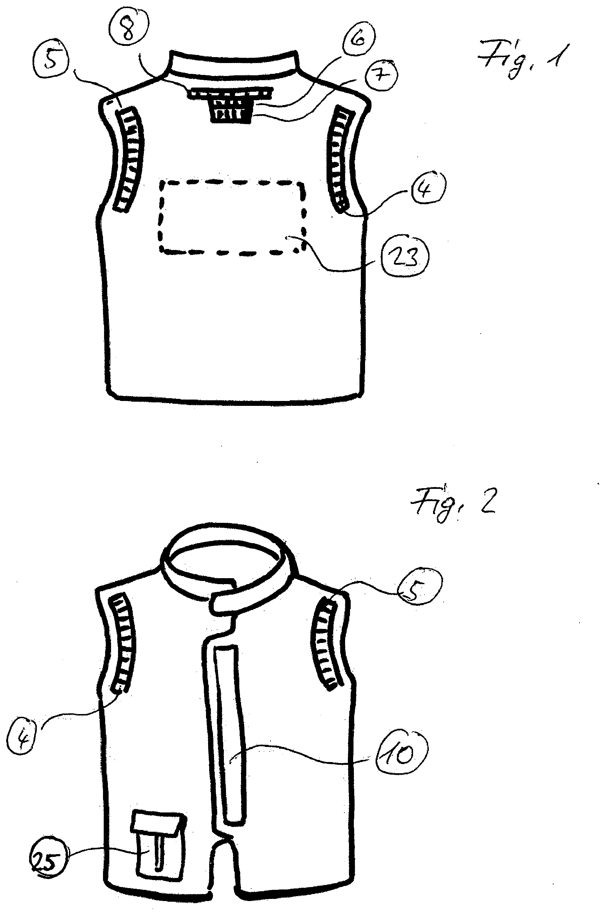

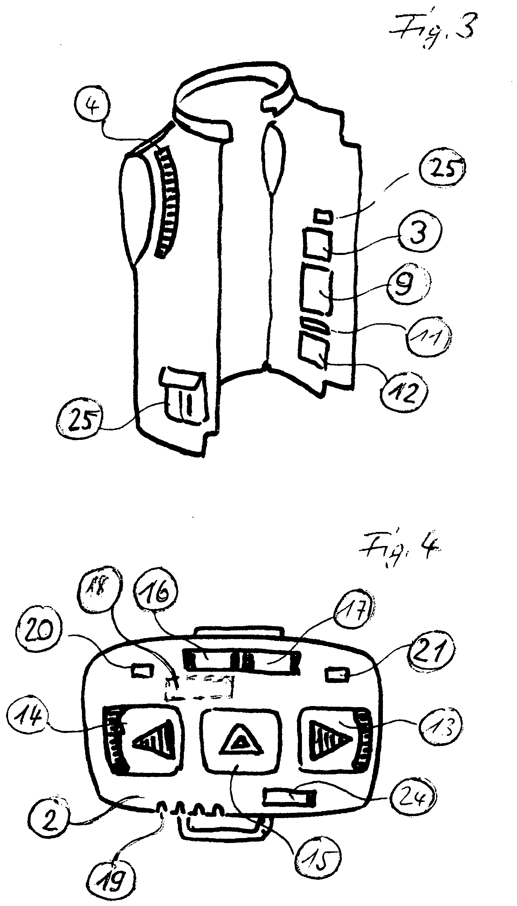

Fig.1 und Fig. 2 zeigt die Anordnung der gelben Lichtsignalstreifen (4) und (5) für die Blinkerfunktion auf der Vorder- und Rückseite des Kleidungsstückes, dergestalt angeordnet, dass der hauptsächliche Rückenbereich frei gehalten wird und die Richtungsanzeige auch unmissverständlich erfolgen kann. Weiterhin zeigt Fig. 1 die roten Lichtsignalstreifen (6, 7 und 8) für ein Rücklicht, eine Nebelschlussleuchte und ein Bremslicht, welche mittig im oberen Rückenbereich angeordnet sind, um auch im Falle eines Rucksackträgers die Lichtsignale nicht zu verdecken. Fig. 4 zeigt das Bedienteil (2) für die Funksteuerung der Lichtsignale. Das wasserdichte Bedienteil kann ohne Werkzeug an der Lenkstange angebracht bzw. abgenommen werden und beinhaltet alle erforderlichen elektromechanischen und elektronischen Schaltelemente für die Lichtsignale Blinken Rechts (13) und Blinken Links (14), Warnblinken (15), Rücklicht (16) und Nebelschlussleuchte (17). Bei abruptem Bremsen wird über einen eingebauten Beschleunigungssensor (18) automatisch die Bremsleuchte (8) aktiviert.
Zusätzlich ist für die Blinkfunktion Links bzw. Rechts ein akustischer Geber (19) installiert. Ein weiterer Schalter (24) ist als Reserve vorhanden, mit dem ein auf der Rückseite des Kleidungsstückes, optional angebrachtes LED-Matrix-Panel (23) eingeschaltet werden kann. Der Zustand der Batteriekapazität des batteriebetriebenen Bedienteils wird mittels Indikator (20) angezeigt. Ferner werden alle Schalterelemente des Bedienteils bei Einbruch der Dunkelheit mittels eines Dämmerungsschalters (21) automatisch beleuchtet. Am Bedienteil (2) kann bei Bedarf zusätzlich eine im Umfang verstellbare Handschlaufe (22) entsprechend Fig. 4 montiert werden, um einen Gebrauch durch Skateboardfahrer oder anderen Personen ohne Zweirad zu ermöglichen. Mit einem optionalen, handelsüblichen und frei programmierbaren LED-Matrix-Panel (23) kann die Signal- und Warnweste (1) auch von Einsatzkräften benutzt werden, welche ereignisbezogene, alphanumerische oder grafische Leuchtmuster anzeigen können. Hierbei kann das Ein- und Ausschalten der Matrix (23) sowohl ferngesteuert mittels der Schalters (24) vom Bedienteil (2), von einem Smartphone mittels Bluetooth, als auch manuell an der Weste mit Schalter (25) erfolgen. Die Funkfernsteuerung soll aufgrund der geringen Reichweite mittels etablierter Bluetooth-Technologie erfolgen und bietet außerdem den Vorteil von App-Anwendungen per Smartphones, so dass die Signal- und Warnweste auch als portables Warndreieck bzw. Warnschild eingesetzt werden kann. Fig. 3 zeigt die Elektronik- und Stromversorgungs-Einbauten, wie Empfangsteil (3), Akkus (9), Ladezustandsanzeige der Akkus (11), manuellen Schalter (25) für eine optionale LED-Matrix (23) und induktive Ladeeinrichtung (12) für kabel- und kontaktloses Laden der Akkus bei unzureichender Solarladung durch das Solarpanel (10) auf der Vorderseite der Weste. Am Empfangsteil (3) ist ein separater Kabelausgang angebracht, an welchen das LED-Matrix-Panel (23) mit einem Kabel bei Bedarf angesteckt werden kann. Das Basis-Konzept der Signal- und Warnweste ist als komplett kabelloses System gestaltet, so dass ein komfortables Tragen mit einfachster Handhabung bei völliger Bewegungsfreiheit gegeben ist. Das gleiche System ist auch zumindest in Teilfunktionen in einen Schutzhelm oder Rucksack integrierbar, wie in Fig. 6 und Fig. 7 dargestellt.

### Bezugszeichenliste:

- 1: Weste
- 2: Bedienteil mit Sender
- 3: Empfangsteil
- 4: Gelber LED-Lichtsignalstreifen Blinker RECHTS
- 5: Gelber LED-Lichtsignalstreifen Blinker LINKS
- 6: Roter LED-Lichtsignalstreifen Rücklicht
- 7: Roter LED-Lichtsignalstreifen Nebelschlussleuchte
- 8: Roter LED-Lichtsignalstreifen Bremslicht
- 9: Akku
- 10: Solarpanel
- 11: Akku-Ladezustandsanzeige
- 12: Induktive Ladeeinrichtung
- 13: Schalter Blinken Rechts
- 14: Schalter Blinken Links
- 15: Schalter Warnblinken
- 16: Schalter Rücklicht
- 17: Schalter Nebelschlussleuchte
- 18: Bremssensor
- 19: Akustiksignalgeber
- 20: Batterieanzeige Bedienteil
- 21: Helligkeitssensor
- 22: Handschlaufe
- 23: LED-Matrix
- 24: Schalter für LED-Matrix am Bedienteil
- 25: Schalter Für LED-Matrix in der Weste
- 26: Tasche
- 27: Schutzhelm

## Patentansprüche

1. Signal- und Warnvorrichtung mit Anzeigeelementen, **dadurch gekennzeichnet, dass** die Übertragung der Signalzustände für die Anzeigeelemente (4, 5, 6, 7, 8) mittels eines im Griffbereich des Benutzers vorgesehenen Bedienteils (2) und eines in der Vorrichtung (1) angebrachten Empfangsteils (3) erfolgt.

2. Signal- und Warnvorrichtung nach Anspruch 1, **dadurch gekennzeichnet, dass** Anzeigeelemente für die Fahrtrichtung Rechts (4) und die Fahrtrichtung Links (5) an der Vorder- und Rückseite der Vorrichtung (1) angebracht sind, und dass die Anzeigeelemente (4) und (5) im Bedarfsfall gleichzeitig als Warnblinkeinrichtung vom Bedienteil (2) ansteuerbar sind.

3. Signal- und Warnvorrichtung nach Anspruch 1 oder 2, **dadurch gekennzeichnet, dass** Anzeigeelemente Rücklicht (6) und Nebelschlussleuchte (7) an der Rückseite der Vorrichtung (1) angebracht sind.

4. Signal- und Warnvorrichtung nach einem der vorangehenden Ansprüche , **dadurch gekennzeichnet, dass** Anzeigeelemente Bremslicht (8) an der Rückseite der Vorrichtung (1) angebracht ist.

5. Signal- und Warnvorrichtung nach einem der vorangehenden Ansprüche, **gekennzeichnet durch** eine Vorrichtung zur Anzeige des Ladezustands der Akkus (11).

6. Signal- und Warnvorrichtung nach einem der vorangehenden Ansprüche, **dadurch gekennzeichnet, dass** Solarzellen (10) an beliebiger Stelle, jedoch vorzugsweise an der Vorderseite der Vorrichtung (1) zur Ladung der Akkus (11) in der Weste (1) angebracht sind.

7. Signal- und Warnvorrichtung nach einem der vorangehenden Ansprüche **gekennzeichnet durch** eine induktive Ladeeinrichtung (12), die ein kontaktloses Laden der Akkus (12) in der Weste (1) ermöglicht.

8. Signal- und Warnvorrichtung nach einem der vorangehenden Ansprüche, **gekennzeichnet durch** ein batteriebetriebenen Bedienteils (2), mit EIN/AUS-Schaltfunktionen für Blinker links (13), Blinker rechts (14), Warnblinken (15), Rücklicht (16) und Nebelschlussleuchte (17)

9. Signal- und Warnvorrichtung nach einem der vorangehenden Ansprüche, **gekennzeichnet durch** einen bevorzugt im Bedienteil (2) untergebrachten Sensor (18), welcher ein abruptes Abbremsen eines benutzten Fahrzeuges erkennt und automatisch das Anzeigeelement Bremslicht (8) auf der Rückseite der Vorrichtung (1) aktiviert.

10. Signal- und Warnvorrichtung nach einem der vorangehenden Ansprüche, **gekennzeichnet durch** eine Vorrichtung zur optischen und/oder akustischen Kapazitätsanzeige der Batterie des Sendeteils (2).

11. Signal- und Warnvorrichtung nach einem der vorangehenden Ansprüche, **gekennzeichnet durch** eine Vorrichtung zur akustischen Signalanzeige (19) für die Blinkerfunktionen (13) und (14) sowie die Bremsfunktion bei aktiviertem Sensor (18).

12. Signal- und Warnvorrichtung nach einem der vorangehenden Ansprüche, **gekennzeichnet durch** eine Beleuchtungseinheit zur Beleuchtung aller Bedienelemente im Bedienteil (2) bei Einbruch der Dunkelheit automatisch durch Einsatz eines Dämmerungsschalters (21).

13. Signal- und Warnvorrichtung nach einem der vorangehenden Ansprüche, **gekennzeichnet durch** eine Vorrichtung zur Aufbewahrung des demontierten Bedienteils (2), wobei hierzu an der Vorrichtung (1) eine verschließbare Tasche (26) angebracht ist.

14. Signal- und Warnvorrichtung nach einem der vorangehenden Ansprüche, gekennzeichnet, dass das Bedienteil (2) mit einer im Umfang verstellbaren Handschlaufe (22) versehen werden kann.

15. Signal- und Warnvorrichtung nach einem der vorangehenden Ansprüche, gekennzeichnet, dass im Bedienteil (2) ein Sensor zur Lageerkennung OBEN/UNTEN integriert ist, welcher die Schaltfunktion Blinken Links und/oder Blinken Rechts umkehrt bzw. richtig zuordnet, wenn das Bedienteil (2) nicht an der Lenkstange montiert ist.
